# FASCICULE DE BREVET EUROPEEN

(11) **EP 0 478 422 B1**
(45) Date de publication et mention de la délivrance du brevet: **29.06.1994**
(21) Numéro de dépôt: 91402497.1
(22) Date de dépôt: 19.09.1991
(51) Int. Cl.: G01V 1/20

(54) **Gaine armée notamment pour flute sismique marine**
Armierte Hülse insbesondere für ein meeresseismisches Messkabel
Armowed sheath particularly for a seismic streamer

(30) Priorité: 20.09.1990 FR 9011608
(43) Date de publication de la demande: 01.04.1992
(73) Titulaire: ATELIERS MECANIQUES DE ST. GAUDENS A M G, 31800 Valentine (FR)
(72) Inventeur: Bonneau, Robert, F-31800 Saint Gaudens (FR)
(74) Mandataire: Martin, Jean-Jacques

(56) Documents cités:
- FR-A- 2 496 902
- US-A- 4 984 218

## Description

La présente invention concerne une gaine tubulaire longue, destinée à être tractée à l'état immergé, et incorporant dans son épaisseur une armature longitudinale constituée par au moins un groupe d'au moins un fil d'armature assurant le maintien longitudinal de ladite gaine à l'encontre des efforts de traction.

L'invention s'applique de façon particulièrement avantageuse aux flûtes sismiques marines. Ces dispositifs connus comportent, répartis à l'intérieur de la gaine, des transducteurs acoustiques chargés d'enregistrer les ondes acoustiques de compression provoquées par des sources de bruit, d'origine sismique par exemple. De façon générale, une flûte sismique comprend, sur plusieurs centaines de mètres, sinon plusieurs kilomètres, une suite de section de flûtes interconnectées, dont chacune mesure par exemple 50 mètres. La flûtes sismique marine ainsi constituée est immergée et tractée par un navire.

Le brevet français n° 2 496 902 décrit une gaine tubulaire longue conforme au préambule qui, par rapport aux gaines de l'état antérieur de la technique, présente l'avantage d'offrir par elle-même une très bonne résistance aux importantes sollicitations de traction exercées sur la flûte sismique, sans exiger, à l'intérieur de la gaine, la présence de câbles tracteurs encombrants et générateurs de bruits acoustique et électrique parasites. Dans cette gaine connue, des fils d'armature répartis en plusieurs groupes sont incorporés dans l'épaisseur de la gaine et assurent la même fonction que les câbles tracteurs sans en avoir les inconvénients.

Toutefois, la flûte sismique marine connue du brevet français mentionné ci-dessus ne garantit pas toujours les meilleures conditions de navigation dans la mesure où elle est relativement sensible au courant, remous, etc., dans lesquels elle se trouve plongée.

Aussi, le problème technique général à résoudre par l'objet de la présente invention est de réaliser une gaine conforme au préambule qui présenterait des qualités de navigation améliorées par rapport à la gaine connue.

La solution à ce problème technique général consiste, selon la présente invention, en ce qu'un bossage longitudinal est disposé, sur la périphérie de la gaine, en regard dudit groupe d'au moins un fil d'armature.

De cette manière, lorsque la flûte est en mouvement à l'état immergé, le bossage s'étendant le long de la gaine exerce une fonction d'ancrage dynamique qui assure à ladite gaine une bonne stabilité de trajectoire et lui confère ainsi des aptitudes de navigabilité nettement supérieures à celles de la gaine connue.

D'autre part, la gaine selon l'invention présente l'avantage supplémentaire que le bossage prévu offre une bonne protection à la structure de résistance à la traction constituée par le groupe d'au moins un fil d'armature.

Un autre problème technique plus particulier que se propose de résoudre l'objet de la présente invention est d'améliorer les performances acoustiques de la gaine selon l'invention lorsque celle-ci est destinée à recevoir des transducteurs acoustiques distribués à l'intérieur de ladite gaine.

Une solution à ce problème technique plus particulier consiste en ce que la gaine selon l'invention est constituée d'un matériau externe capable d'absorber les ondes d'écoulement turbulent et, au moins, d'un matériau interne, lesdits matériaux externe et interne étant capables de transmettre les ondes acoustiques de compression. En effet, dans les expériences de sismique marine, les informations significatives sont généralement transportées par des ondes acoustiques de compression. La flûte sismique doit donc présenter vis-à-vis de ce type d'ondes la transmission la plus grande de façon à les acheminer sans atténuation vers les transducteurs placés à l'intérieur de la gaine. D'autre part, pour augmenter la sensibilité de la détection, il y a également avantage à éliminer, ou au moins réduire les bruits parasites dues aux ondes d'écoulement turbulent résultant du déplacement de la gaine relativement à l'élément liquide dans lequel elle se trouve immergée.

Une autre solution au problème technique plus particulier posé consiste en ce que la gaine selon l'invention comporte sur sa surface extérieure des microrainures longitudinales. Ces microrainures ont, en effet, la propriété de rompre les écoulements turbulents susceptibles de se former au niveau de la peau de la gaine.

La description qui sa suivre en regard des dessins annexés, donnés à titre d'exemples non limitatifs, fera bien comprendre en quoi consiste l'invention et comment elle peut être réalisée.

La figure 1 est une vue en coupe d'une gaine selon l'invention.

La figure 2 est une vue partielle en coupe d'une gaine selon l'invention.

La figure 3 est une vue en coupe longitudinale d'un dispositif transducteur distribué comportant une gaine selon l'invention.

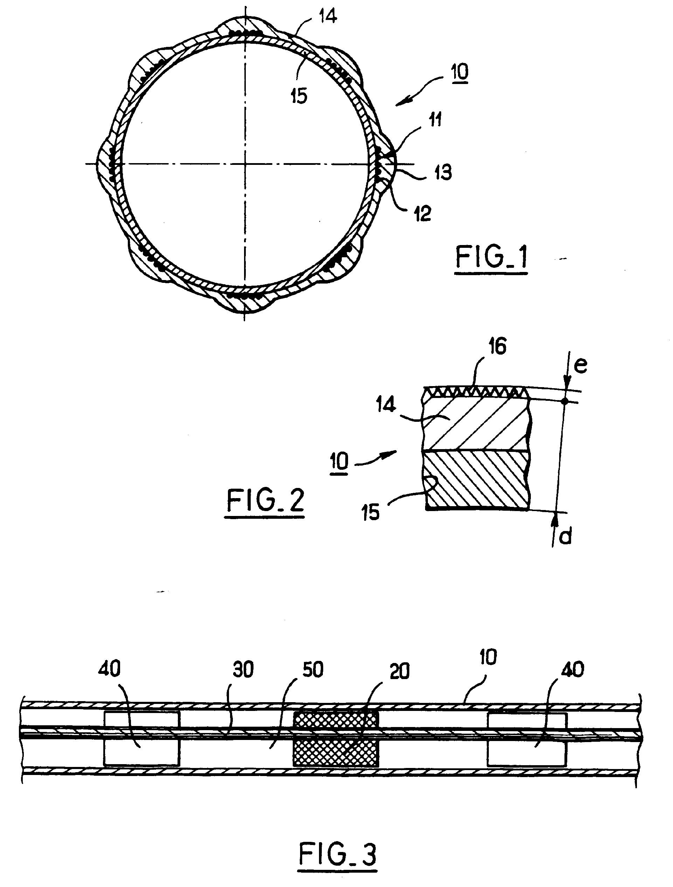

La figure 1 montre, en coupe, une gaine tubulaire longue 10, destinée à être tractée à l'état immergé, et incorporant dans son épaisseur une armature longitudinale constituée, par exemple, de huit groupes 11 de cinq fils 12 d'armature. Cette configuration d'armature a pour fonction d'assurer le maintien longitudinal de ladite gaine 10 à l'encontre des efforts de traction qu'elle est amenée à subir lorsqu'elle est tirée par un navire, et notamment en cas de mer agitée.

Comme l'indique la figure 1, la gaine 10 comporte des bossages 13 longitudinaux disposés, sur la périphérie de la gaine, en regard des groupes 11 de fils 12 d'armature. Ces bossages 13 ont pour effet d'améliorer la navigation de la gaine par ancrage dynamique. Par ailleurs, les bossages 8 jouant un rôle de protection efficace vis-à-vis des fils 12 d'armature.

De façon connue, les fils d'armature peuvent être en fibre de verre ensimée, faiblement toronnée. Mais ils peuvent également être en fibre de bore, de carbone, ou d'une polyamide aromatique comme celle vendue sous le nom de Kevlar (Dupont de Nemours). Pour certaines applications, on peut aussi utiliser des fils métalliques incorporés à la gaine. Il pourra alors être avantageux de distribuer les fils régulièrement un par un, au lieu de les prévoir par groupes de plusieurs fils. On notera que des fils métalliques individuels ainsi disposés dans l'épaisseur de la gaine engendrent nettement moins de bruit qu'un câble toronné en acier, libre à l'intérieur de la gaine.

La gaine 10 montrée aux figures 1 et 2 est plus particulièrement destinée à recevoir des transducteurs acoustiques, distribués à l'intérieur de ladite gaine. A cet effet, la gaine 10 est constituée d'un matériau 14 capable d'absorber les ondes d'écoulement turbulent et un matériau interne 15, lesdits matériaux externe et interne étant capables de transmettre des ondes acoustiques de compression. On obtient ainsi une gaine 10 permettant de limiter le bruit parasite lié aux écoulements turbulents à la surface de la gaine, tout en conservant la bonne transmission des ondes de compression, nécessaire aux dispositifs transducteurs, du type flûte sismique marine, pour lesquels les ondes de compression servent de support aux signaux utiles. Il résulte de ces dispositions avantageuses une amélioration globale des performances acoustiques de tels dispositifs.

Le matériau externe 14 doit être le plus autoamortissant possible de façon à pouvoir filtrer au mieux tout bruit aléatoire, autre que le bruit acoustique que l'on veut capter. Le matériau externe devra donc présenter dans la gamme 10-100 Hz une tangente δ élevée de l'ordre de 0,7, centrée autour de la température nominale de travail qui est de l'ordre de 13°C. Rappelons que la tangente δ d'un matériau, donnant la valeur de son pouvoir amortissant, est égale au rapport du module imaginaire de viscosité (E˝) au module d'élasticité (E′).

A titre d'exemple non limitatif, les groupes 11 de fils 12 d'armature sont situés à la séparation entre lesdits matériaux externe 14 et interne 15. L'ensemble de la gaine est réalisé en une seule fois par coextrusion de ses différents constituants.

Quant à la nature des matériaux eux-mêmes, le matériau externe 14 est en matière thermoplastique élastomère insensible à l'eau, même salée, tandis que le matériau interne 15 est en une matière compatible avec l'agent de flottabilité introduit à l'intérieur de la gaine qui est en général une huile ou autre hydrocarbure, souvent du kérosène.

Ainsi, on peut envisager de nombreuses matières, comme le poly(chlorure de vinyle) ou d'autres poly(alcoylènes), éventuellement halogénés. Bien que le caoutchouc puisse convenir, dans certains cas au moins, la demanderesse préfère, comme variantes, les poly(uréthanes)-élastomères, les poly(siloxanes), et les poly(époxydes) avec adjuvants chlorés.

Comme agents plastifiants additionnels, on peut utiliser les plastifiants primaires polyesters, ou encore polyéthers. Il est préférable d'ajouter des agents stabilisants anti-oxydants, anti-ultraviolets, et, le cas échéant, des pigments de charge, de même que des agents fongicides, bactéricides, et ignifugeants, afin de maintenir l'intégrité de la gaine, au stockage notamment. Enfin, on prévoit avantageusement un colorant donnant à la gaine une couleur sombre, tout au moins pour les applications en mer.

La figure 2 montre sur une vue partielle en coupe que la gaine 10 présente à sa surface extérieure des microrainures longitudinales 16 qui sont formées lors de l'extrusion de la gaine. Ces microrainures 16 ont pour fonction d'éliminer, au moins partiellement, les écoulements turbulents eux-mêmes au voisinage immédiat de la gaine 10, ce qui, en coopération avec le matériau externe 14 fortement absorbant, contribue à minimiser considérablement le bruit parasite provoqué par ce type d'écoulement. Pour obtenir un effet suffisamment sensible, les microrainures 16 doivent avoir une profondeur e de l'ordre de 10 % de l'épaisseur d de la gaine. Typiquement, pour une épaisseur de gaine de 3 mm, la profondeur des microrainures peut être prise égale à 0,28 mm.

La figure 3 illustre schématiquement un dispositif transducteur distributeur du type flûte sismique marine, comprenant une gaine 10, analogue à celles montrées aux figures 1 et 2, à l'intérieur de laquelle sont logés des transducteurs acoustiques 20, tels que des hydrophones, distribués le long de la gaine 10. Des connexions électriques 30 multi-conducteurs relient les transducteurs à l'une ou l'autre des extrémités de la gaine. De place en place, et plus rapprochés que les transducteurs 20, sont également prévus des flotteurs 40. Enfin, le reste de la gaine est rempli d'un fluide 50 moins dense que l'eau, tel que du kérosène, qui joue le rôle d'agent de flottabilité.

## Revendications

1. Gaine tubulaire longue (10), destinée à être tractée à l'état immergé, et incorporant dans son épaisseur une armature longitudinale constituée par au moins un groupe (11) d'au moins un fil (12) d'armature assurant le maintien longitudinal de ladite gaine (10) à l'encontre des efforts de traction, caractérisée en ce qu'un bossage (13) longitudinal est disposé, sur la périphérie de la gaine, en regard dudit groupe (11) d'au moins un fil (12) d'armature.

2. Gaine selon la revendication 1, caractérisée en ce que ledit fil (12) d'armature est en fibre de verre ensimée, faiblement toronnée.

3. Gaine selon la revendication 1, caractérisée en ce que ledit fil (12) d'armature est en fibre de bore, de carbone, ou d'une polyamide aromatique telle que le Kevlar.

4. Gaine selon l'une quelconque des revendications 1 à 3, destinée à recevoir des transducteurs acoustiques distribués à l'intérieur de ladite gaine, caractérisée en ce qu'elle est constituée d'un matériau externe (14) capable d'absorber les ondes d'écoulement turbulent et, au moins, d'un matériau interne (15), lesdits matériaux externe et interne étant capables de transmettre les ondes acoustiques de compression.

5. Gaine selon la revendication 4, caractérisée en ce que ledit groupe (11) d'au moins un fil (12) d'armature est situé à la séparation entre lesdits matériaux externe (14) et interne (15).

6. Gaine selon l'une des revendications 4 ou 5, caractérisée en ce que lesdits matériaux externe (14) et interne (15) sont coextrudés avec ledit fil (11) d'armature.

7. Gaine selon l'une quelconque des revendications 4 à 6, caractérisée en ce que ledit matériau externe (14) est en matière thermoplastique élastomère insensible à l'eau, et en ce que ledit matériau interne (15) est en une matière thermoplastique élastomère insensible aux hydrocarbures.

8. Gaine selon l'une quelconque des revendications 1 à 7, caractérisée en ce qu'elle comporte sur sa surface extérieure des microrainures longitudinales (16).

9. Dispositif transducteur distribué, du type comprenant une gaine tubulaire longue (10), des transducteurs acoustiques (20) distribués dans la gaine, des connexions électriques (30) permettant de relier les transducteurs (20) à l'une au moins des extrémités de la gaine, caractérisé en ce que ladite gaine (10) est conforme à l'une des revendications 1 à 8.

## Patentansprüche

1. Langgestrecktes Hüllrohr (10) zum Verlegen unter Wasser, das in seiner Wand eine längsverlaufende Armierung aufweist, die aus wenigstens einer Gruppe (11) von wenigstens einem Armierungsfaden (12) besteht, der das Hüllrohr (10) in Längsrichtung gegenüber Zugbeanspruchungen hält, dadurch gekennzeichnet, daß eine längsverlaufende Wulst (13) am Außenumfang des Hüllrohres der Gruppe (11) von wenigstens einem Armierungsfaden (12) gegenüber angeordnet ist.

2. Hüllrohr nach Anspruch 1, dadurch gekennzeichnet, daß der Armierungsfaden (12) eine leicht verdrillte Schmelzglasfaser ist.

3. Hüllrohr nach Anspruch 1, dadurch gekennzeichnet, daß der Armierungsfaden (12) eine Borfaser, eine Kohlefaser oder eine Faser aus einem aromatischen Polyamid wie Kevlar ist.

4. Hüllrohr nach einem der Ansprüche 1 bis 3 zur Aufnahme von Schallwandlern, die im Inneren des Hüllrohres verteilt sind, dadurch gekennzeichnet, daß es aus einem äußeren Material (14), das Turbulenzströmungswellen absorbieren kann, und wenigstens einem inneren Material (15) besteht, welche inneren und äußeren Materialien Kompressionsschallwellen übertragen können.

5. Hüllrohr nach Anspruch 4, dadurch gekennzeichnet, daß die Gruppe (11) von wenigstens einem Armierungsfaden (12) an der Trennstelle zwischen dem äußeren Material (14) und dem inneren Material (15) angeordnet ist.

6. Hüllrohr nach einem der Ansprüche 4 oder 5, dadurch gekennzeichnet, daß das äußere Material (14) und das innere Material (15) mit dem Armierungsfaden (11) koextrudiert sind.

7. Hüllrohr nach einem der Ansprüche 4 bis 6, dadurch gekennzeichnet, daß das äußere Material (14) ein wasserunempfindliches elastomeres thermoplastisches Material ist und daß das innere Material (15) ein kohlenwasserstoffunempfindliches elastomeres thermoplastisches Material ist.

8. Hüllrohr nach einem der Ansprüche 1 bis 7, dadurch gekennzeichnet, daß es an seiner Außenfläche längsverlaufende Mikrorillen (16) aufweist.

9. Verteilte Wandlervorrichtung mit einem langgestreckten Hüllrohr (10), Schallwandlern (20), die im Hüllrohr verteilt sind, elektrischen Anschlüssen (30), die es erlauben, die Wandler (20) mit wenigstens einem der Enden des Hüllrohres zu verbinden, dadurch gekennzeichnet, daß das Hüllrohr (10) nach einem der Ansprüche 1 bis 8 ausgebildet ist.

## Claims

1. Long tubular sheath (10), intended to be drawn along in the submerged state, and incorporating, in its thickness, a longitudinal reinforcement consisting of at least one group (11) of at least one reinforcement yarn (12) providing longitudinal support for the said sheath (10) counter to traction forces, characterized in that a longitudinal bossing (13) is arranged on the periphery of the sheath, facing the said group (11) of at least one reinforcement yarn (12).

2. Sheath according to Claim 1, characterized in that the said reinforcement yarn (12) is made of greased glass fibre, slightly stranded.

3. Sheath according to Claim 1, characterized in that the said reinforcement yarn (12) is made of boron or carbon fibre, or of an aromatic polyamide such as Kevlar.

4. Sheath according to any one of Claims 1 to 3, intended to accommodate acoustic transducers distributed within the said sheath, characterized in that it consists of an outer material (14) capable of absorbing the turbulent flow waves, and at least one inner material (15), the said outer and inner materials being capable of transmitting the acoustic compression waves.

5. Sheath according to Claim 4, characterized in that the said group (11) of at least one reinforcement yarn (12) is situated at the separation between the said outer (14) and inner (15) materials.

6. Sheath according to either of Claims 4 or 5, characterized in that the said outer (14) and inner (15) materials are co-extruded with the said reinforcement yarn (12).

7. Sheath according to any one of Claims 4 to 6, characterized in that the said outer material (14) is of thermoplastic elastomer material insensitive to water, and in that the said inner material (15) is of a thermoplastic elastomer material insensitive to hydrocarbons.

8. Sheath according to any one of Claims 1 to 7, characterized in that it includes longitudinal microgrooves (16) on its external surface.

9. Distributed transducer device, of the type comprising a long tubular sheath (10), acoustic transducers (20) distributed in the sheath, electrical connections (30) making it possible to link the transducers (20) to at least one of the ends of the sheath, characterized in that the said sheath (10) is in accordance with one of Claims 1 to 8.
